# EUROPEAN PATENT SPECIFICATION

(11) **EP 3 311 909 B1**
(45) Date of publication and mention of the grant of the patent: **17.06.2020**
(21) Application number: 16195328.6
(22) Date of filing: 24.10.2016
(51) Int. Cl.: B01J 2/16, F26B 3/00, F23C 15/00

(54) **PULSED COMBUSTOR DRYER FOR DRYING AND GRANULATION OF A WET FEEDSTOCK**
GEPULSTER BRENNKAMMERTROCKNER ZUM TROCKNEN UND GRANULIEREN NASSER ROHSTOFFE
SÉCHOIR À COMBUSTION PULSÉ POUR LA DÉSHYDRATATION ET LA GRANULATION D'UNE MATIÈRE PREMIÈRE HUMIDE

(43) Date of publication of application: 25.04.2018
(73) Proprietor: Pulsed Powders Ltd, A91 X019 (IE)
(72) Inventor: HART, Oliver, Co Armagh BT63 5BF (GB)
(74) Representative: Meissner Bolte Partnerschaft mbB

(56) References cited:
- EP-A1- 3 109 546
- DE-U1-202007 001 286
- US-A- 4 395 830
- US-A- 4 967 688
- US-A1- 2009 124 489
- US-A1- 2015 375 234
- Arun Mujumdar ET AL: "Pulse Combustion Drying" In: "Handbook of Industrial Drying, Fourth Edition", 22 July 2014 (2014-07-22), CRC Press, XP055234567, ISBN: 978-1-4665-9666-5 pages 503-517, DOI: 10.1201/b17208-26,

## Description

The invention relates to a fluid bed granulator, in particular spouted bed granulator, in particular for a pulse or pulsed combustor dryer for drying and granulation of a wet feedstock as well as to a combustor dryer and a method of dehydration and granulation of a wet feedstock.

US 2009/0124489 A1 discloses a method for producing urea pellets. US 4 395 830 A describes a fluid bed dryer. Pulse combustion drying is generally explained in Arun Mujumdar ET AL: "Puis Combustion Drying", in: "Handbook of Industrial Drying", Fourth Edition, 22 July 2014, ISBN: 978-1-46659666-5. US 4 967 688 A describes a powder processing apparatus.

The term pulse, pulsed (or impulse) combustion (PC) originates from the intermittent (periodic) combustion of air (or another oxidant) with gaseous, liquid or solid fuel. Pulse combustors typically comprise inlet ports to admit combustion air and fuel, a combustion chamber in which the fuel/air mixture is ignited and a resonance tube or tailpipe used to expel the exhaust gases. The continuous stream of hot pulsating gases is then utilised in downstream processes such as heating, atomisation and drying of liquid feedstock.

Pulse combustion burners have advantages over steady flame combustion burners, e.g. an increased mass and heat transfer rate, an increased combustion intensity and higher energy efficiency with low excess air and reduced pollutant emissions. Disadvantages are a comparatively high noise level (requiring special attenuation measures) and difficulties of controlling (due to interactive process parameters).

In pulse combustion burners of the prior art, the "pulses" originate inside a combustion chamber at a predetermined frequency of oscillation which is dependent on the speed of sound and the physical relationship between the combustion chamber and tailpipe dimensions in accordance with the Helmholtz formulas. Known pulse combustors used in drying processes operate as Helmholtz resonators where the single (fixed) frequency originating from the combustion chamber is "tuned" primarily by changing the length of the tailpipe.

The mechanism used in such a pulse combustor to excite oscillations at a specific frequency (or "note") is similar to those used in music instruments such as a flute or by blowing air over the neck of an empty bottle. Here, the frequency of oscillation (or "note") originates inside the cavity of the instrument as a result of its size and shape. The music player blows an even (non-vibrating) air stream over an opening which excites secondary circulating currents or "eddies" which generate acoustic oscillations or "pulses".

Furthermore, the inventor developed a "pulsed" combustor method in which the combustion air is mechanically excited or (pulsed) at the predetermined frequency externally to and before entering a combustion chamber.

A burner frequency therefore originates outside the combustion chamber and is not determined by the physical dimensions or operating conditions of either the combustion chamber or any tailpipe (as in the prior art). The source of oscillations produced by the pulsed combustor is similar to that of a trombone, bugle or a blowing horn (vuvuzela), where the "note" is dictated by the vibrating lips of the player and not by the natural resonance of a cavity. In such cases, the instrument body and its physical shape merely serve to amplify or intensify the acoustic note created by the player's lips. In the field of dehydration and/or granulation, the "pulsed" combustion method according to the present invention allows a simple adjustment of the air pulses, wherein it is not necessary to physically change any dimensions of the combustor or combustor tailpipe (as in the prior art). Hence, the pulsed combustor assembly contributes to an efficient and simple dehydration and/or granulation of wet feedstock.

The term "air" may be understood as ambient air but should be generally understood as being any gas (mixture) containing oxygen (of at least 5% or at least 20%). The term "beat frequency" (f3) may be understood as the audible beat frequency being the absolute value of the difference of the frequencies (f1, f2) generating the beat: f3 = |f1-f2|.

Particles, generated and dried by a in particular pulse or pulsed combustor drying process can be very small so that it is often necessary to carry-over the fine particles into a device such as a cyclone or bag house so that the particles set in order to be removed from the process. Such process is, however, comparatively time consuming and inefficient. Moreover, at least some materials to be dried tend to stick together (e.g. at the walls of a drying chamber) which makes it difficult to remove and recover the final product.

It is an object of the present invention to propose a combustor dryer, in particular pulse or pulsed combustor dryer wherein a feedstock can be dried in an efficient way. In particular, drying and granulation (and final removal of the product) shall be performed in a comparatively short time. Moreover, it is an object of the invention to propose a corresponding device which may be arranged in a combustor dryer for accelerating drying and, in particular, granulation and preferably collecting of a wet feedstock. In addition, it is an object of the present invention to propose a corresponding method of dehydration and granulation of a wet feedstock.

This object is solved by the features of claim 1, 12 and 13.

According to an embodiment, a fluid bed granulator, in particular spouted bed granulator, in particular for a pulse or pulsed combustor dryer for drying and granulation of a wet feedstock, in particular a viscous feedstock such as a feedstock containing natural fibres, sugars and/or vegetable starches, is proposed, wherein the fluid bed granulator, in particular spouted bed granulator comprises a receiving portion for receiving the feedstock (emerging from a combustion chamber driven atomizer of the pulse or pulsed combustor assembly), a fluid bed gas, in particular spouting gas supply means for supplying a (pressurised) fluid bed gas, in particular spouting gas to the receiving portion via one or more openings, in particular one or more slots, and at least one adjustment means for adjusting an opening degree (width) of the one or more openings.

A core idea of the invention is to use a spouted bed granulator for a (pulse or pulsed) combustor dryer for drying and granulation of wet feedstock. Spouted gas supply means for supplying spouting gas to a receiving portion is provided, wherein the fluid bed gas, in particular spouting gas is supplied via one or more openings (in particular one or more slots) which are provided in a wall of the receiving portion. In particular, the one or more openings (one or more slots) may be considered as one or more interruptions of an inner surface of the receiving portion. The receiving portion may have a container-shape, in particular a bowl-shape. In other words, the receiving portion may form a container for receiving (at least part of) the feedstock coming from a combustion chamber driven atomizer of a pulse or pulsed combustor assembly. The spouting gas supplying means may comprise (one or more) supplying lines for supplying the (pressurised) spouting gas to the one or more openings (one or more slots). Furthermore, the supplying means may comprise a source of pressurised gas, such as a pressurised gas container and/or a compressor and/or a blower and/or a pump. The at least one adjustment means for adjusting a width of the one or more openings (one or more slots) may comprise a valve and/or a control means, in particular electronic control means (e.g. comprising a microprocessor and/or a display and/or an input means such as a keyboard and/or touch screen) for controlling the opening degree (width). An "adjustment" and/or "controller" shall preferably mean that a plurality of opening positions (larger than zero) can be set (such plurality may be a continuum or consist of discrete values, e.g. at least two or at least five or at least ten discrete values). Any control means or control device can function as an open loop or closed loop control means (device). A ratio of length to width of the slots (or at least one of the slots) is preferably at least 2 or at least 5 or at least 10 and/or not more than 200 or not more than 100 (in a maximum opened state of the slot). The slots (or at least one of the slots) may be longitudinal. Preferably a cross-section of the slots (or at least one of the slots) is, at least essentially, rectangular.

Due to the at least one adjustment means, the fluid bed gas, in particular spouting gas flow into the receiving portion can be controlled and adjusted so that it may be efficiently adapted to the feedstock to be dried and granulated. In particular, a smooth stream of rising gas can be provided which is advantageous for granulation as well as to prevent a potential (sudden) pressure fluctuation inside a drying chamber responsible for a dynamic feedback into a pulse or pulsed combustor assembly.

In essence, the spouted bed granulator provides, for a large range of potential feedstocks, a bed of moving material which prevents caking and sticking, in particular of temperature-sensitive products, to walls of a drying chamber. Usually, products (feedstock) may be (totally) dehydrated into a dry powder. However, this is not always desirable (e.g., products with a high sugar content are often extremely hydroscopic which makes them difficult to handle). Due to the spouted bed granulator, it is possible to reduce dust build-up in a free broad area of a drying chamber. Moreover, it is possible to minimise fine particles and, hence, in particular a potential carry-over of fine particles into a provided cyclone or bag house. Moreover, "just" sufficient moisture can be provided (retained after atomization) which may be necessary for wetting during a nucleation, coalescing and/or granulation induced by an optional circulating motion inside the spouted bed granulator. An intense (vertical) spouting action may cause product attrition which forms new seed material which may be useful for (spherical) granulation. Moreover, a dynamic base is provided into which cool, dry air may be introduced into the dryer, thereby keeping product melts below their critical glass transition temperature (T_{g}). Such cooling process may be essential to retain natural colour, texture and flavours, when drying food (or other feedstock). In case that a spouted bed granulator is provided, the flow of (spouting) gas can be substantially reduced with respect to known concepts (reduction of more than 50% or even more than 75%).

Preferably, the openings comprise (or consist of) a pair of slots. The slots are preferably oriented towards (opposite) each other (so that gas exiting the one slot collides with gas exiting the other slot). By such arrangement, it is, in particular, possible to induce a circulating motion of the gas inside a bed of a (particulate) product mass, for example inside a drying chamber. As a consequence, a circulating or rolling motion of the product is created by which granulation of the product may be enhanced.

A lower portion of the receiving portion comprises a pair or more of inclined walls approaching each other (and such forming, in cross-section, at least approximately, a V-shape) in the direction of the one or more openings. Alternatively, at least a lower portion of the receiving portion is formed by a frusto-conical inner wall. In particular, the (pair of) inclined walls allow an improved circulating motion inside the bed of a (particulate) product mass, in particular inside a drying chamber. In such a case, the spouting gas (e.g. pressurised externally) can effectively be used as a motivating force to (simultaneously) suspend and rotate the product material in such a way as to create a dilute body of spouting material moving (upwards), in particular along a centre longitudinal axis of the two slots, and returning via a (dense) body of material moving (downward) along the inclined walls (e.g. along the V-shape). In essence, a fast and efficient granulation process can be achieved.

In a preferred embodiment, the spouted granulator comprises a moveable (bottom) member, in particular such that movement of the moveable (bottom) member closes or opens the one or more openings (one or more slots) to a certain degree. In particular, the abovementioned pair of slots may be formed along two (parallel) side portions of the moveable (bottom) member. In such a way, a simple structure for an efficient and simple adjustment (control) of the width of the one or more openings (one or more slots) is provided.

Preferably, the moveable (bottom) member is moved via a cam mechanism (in particular up and down). Such a cam mechanism is simple and can be precisely controlled. This enhances the efficiency of the process.

The moveable member preferably comprises a planar portion for opening and closing an aperture of a wall of the receiving portion or an aperture between two or more walls of the receiving portion. In particular, the moveable member defines a (planar) bottom part of the receiving portion. In a preferred embodiment, the moveable member comprises (or consists of) a web element (i.e. profile element). The web element may define a C-, U-, I- or H-profile element. Moreover, the web element may comprise a cam receiving part which may interact with the abovementioned (rotating) cam in order to move the movable (web) member up or down. In any event, opening and closing of the one or more openings (one or more slots) is precise and simple.

Preferably, a bottom member (in particular the bottom member as described above) may define a bowl-shape. Alternatively, or in addition, a bottom member (in particular the above-described bottom member) may receive an end portion of at least one wall of the receiving portion, in particular such that the end portion of said at least one wall and the bottom member form one or more of the openings, in particular slots.

Preferably, the one or more openings, in particular slots, extend over the (substantially) entire length (or width) of the receiving portion (in particular, the one or more openings, preferably slots, may extend from one inner wall portion to an opposite inner wall portion of the receiving portion). Thereby, a smooth line of rising air may flow along the entire bed length which improves granulation and may eliminate (sudden) pressure fluctuations inside a drying chamber (responsible for a dynamic feedback into a pulse or pulsed combustor assembly). In consequence, the granulation process can be efficiently performed.

In a preferred embodiment, at least one (preferably two), in particular horizontal, walls contact the receiving portion from the outside thereof and form, in particular together with the moveable member, a fluid channel or two fluid channels for supplying the spouting gas to the one or more openings, in particular slots. This may further improve the smoothness of spouting gas flow into the receiving portion and, hence, improves efficiency of the process.

Preferably, a control means is provided for controlling opening and closing of the one or more openings, in particular slots. The control may be open looped or closed looped. Moreover, the control means may comprise a calculation unit (such as a processor, in particular microprocessor) and/or an input means (such as a keyboard and/or touch screen) and/or a display device.

Preferably, the fluid bed granulator comprises at least three, preferably at least five, further preferably at least ten openings for supplying the fluid bed gas. One or more openings for supplying the fluid bed gas may be circular. One or more openings may be covered and/or coverable by, in particular circular, cover elements which may be lifted in order to open the one or more openings. The (circular) cover member may be supported by a rod which may glide within a rod supporting means in order to lift the (circular) cover element. A surface of the (circular) cover element facing the direction of the stream of incoming gas (air) may be concave. The (circular) cover member may be lifted by the force of incoming gas (air) and/or by a (active) lifting device. A diameter of one or more of the openings and/or a diameter of the (circular) cover member may be less than 20%, in particular less than 10%, further preferably less than 5% of a diameter of a bottom of the receiving portion. Moreover, the diameter of one or more of the openings and/or the cover member may be at least 2% of the diameter of the bottom of the receiving portion. In this regard, it can be avoided (at least to a certain degree) that the product sticks on a wall of the receiving portion. In particular, the product may be kept dry and/or cool (e.g. below 30°C). If the product has a low melting point (e.g. sugar) this is particularly advantageous.

According to the invention, a pulse or pulsed combustor dryer, for dehydration and granulation of a wet feedstock, in particular a viscous feedstock such as a feedstock containing natural fibres, sugars and/or vegetable starches, is proposed. The combustor dryer comprises a combustion chamber, a drying chamber, and one or more spouted bed granulators. The one or more spouted bed granulators each comprise a receiving portion for receiving the feedstock from the combustion chamber and spouting gas supplying means for supplying spounting gas to the receiving portion via one or more openings, in particular one or more slots. Furthermore, at least one adjustment means for adjusting the opening degree (width) of the one or more openings (slots) is provided. With such a combustor dryer, an effective and fast drying and granulation of the product can be achieved. In particular, it is possible to collect the dried product fast and reliable. A ratio of length to width of the slots (or at least one of the slots) is preferably at least 2 or at least 5 or at least 10 and/or not more than 200 or not more than 100 (in a maximum opened state of the slot). The slots (or at least one of the slots) may be longitudinal. Preferably a cross-section of the slots (or at least one of the slots) is, at least essentially, rectangular.

If the combustor dryer is configured as pulsed combustor dryer, it comprises preferably at least one fuel supply line, at least one air supply line and at least one pulsed air generator, wherein the pulsed air generator is connected to the air supply line for generating at least a first pulsed airstream with a pulse frequency f1 entering the combustion chamber. Further preferably the combustor dryer comprises a second air supply line and second pulsed air generator being connected to the second air supply line and configured to generate a second pulsed airstream with a pulse frequency f2 entering the combustion chamber, wherein F2 is preferably higher or lower than F1.

The combustor dryer preferably comprises further at least one gas outlet, in particular in an upper area of the drying chamber, for exhausting gasses, in particular humid gas (air), from inside the drying chamber.

With the "pulsed" combustor method according to the invention, the combustion air is mechanically excited (or pulsed) at a predetermined frequency externally to and before entering the combustion chamber. A burner frequency therefore originates outside the combustion chamber and is not determined by the physical dimensions or operating conditions of either the combustion chamber or any tailpipe (as in the prior art). The source of oscillations produced by the pulsed combustor is similar to that of a trombone, bugle or a blowing horn (vuvuzela), where the "note" is dictated by the vibrating lips of the player and not by the natural resonance of a cavity. In such cases, the instrument body and its physical shape merely serve to amplify or intensify the acoustic note created by the player's lips. In the field of dehydration and/or granulation, the "pulsed" combustion method according to the present invention allows a simple adjustment of the air pulses, wherein it is not necessary to physically change any dimensions of the combustor or combustor tailpipe (as in the prior art). Hence, the pulsed combustor assembly contributes to an efficient and simple dehydration and/or granulation of wet feedstock.

The term "air" may be understood as ambient air but should be generally understood as being any gas (mixture) containing oxygen (of at least 5% or at least 20%). The term "beat frequency" (f3) may be understood as the audible beat frequency being the absolute value of the difference of the frequencies (f1, f2) generating the beat: f3 = |f1-f2|. The pulsed air generator may be configured and connected so that a pulsed air stream is not immediately (i.e. directly at the outlet of the generator) mixed with the fuel (coming from the supply line). For example, a travel distance of the pulsed air before being mixed with the fuel to be combusted may be at least 1 cm, preferably at least 10 cm. Moreover, the pulsed air generator may be configured to actively generate the pulsed air stream, i.e. so that the frequency of the pulsed air stream is adjusted (controlled) by the pulsed air generator or, respectively, a control means of the pulsed air generator (only). This means, the pulsed air generator would not be a mere passive element which reacts on other conditions of the combustion assembly, such as a low pressure portion of a combustion cycle.

Preferably, the pulsed combustor assembly comprises a second air supply line and a second pulsed air generator being connected to the second air supply line and configured to generate a second pulsed air stream with a pulse frequency f2 entering the combustion chamber. The second air supply line and/or the second pulse air generator may be structured and/or configured and/or arranged similar to or identical to the first air supply line and/or first pulsed air generator, respectively. The frequency f2 is preferably higher or lower than f1. By this, the adjustment of the frequency within the combustion chamber is further improved. The frequency f1 and/or the frequency f2 may be adjustable. A control means may be provided for adjusting the frequency f1 within a predetermined range and/or for adjusting the frequency f2 within a predetermined range. "Adjusting the frequency" preferably, means that a plurality of frequencies (larger than 0) can be set (the plurality of values may be a continuum or consist of discrete values). The control means can function as an open loop or closed loop control. A first control means may be provided for controlling f1. A second control means may be provided for controlling f2. One control means may be provided for controlling both f1 and f2. In any case, the adjustment possibilities are further improved so that the pulsed combustor assembly may contribute for a more efficient dehydration and/or granulation of a wet feedstock.

The first and/or second pulsed air generator may comprise an (in particular motorised) air interrupter. The air interrupter may comprise a rotating disk, lobe and/or valve assembly. Thereby, the pulse generation is executed in a simple way.

The first air supply line and the second air supply line may be connected to a common compressed air supply line (preferably being part of the pulsed combustor assembly). The pulsed combustor assembly may further comprise a source for compressed air.

Preferably, the frequencies f1 and f2 are adjusted (in particular by the control means) to generate a beat frequency f3 within the combustion chamber. In general, the frequencies f1 and f2 may have a similar (but not identical) value.

For example, f2 may be at least 1% or at least 3% higher and/or less than 30% or less than 15% higher than the frequency f1. If there is only a small difference between the frequencies f1 and f2, a beat frequency f3 will be generated. A "beat" is an interference phenomenon between two waves (sounds) of slightly different frequencies. This interference results in a waveform comprising a high frequency component which is (at least approximately) the average frequency between f1 and f2 and a beat frequency which results from the envelope of the higher frequency component. The beat frequency is (at least approximately) the difference between the frequencies f1 and f2. Energy from the high-frequency components may be utilised both to atomise and dehydrate the wet feedstock passing through an impingement zone. On the other hand, the low beat frequency may pass through the combustion chamber and enhance the dehydration in a drying chamber arranged downstream. Thereby, the efficiency of the dehydration process is improved. In particular, the time for dehydration is reduced and a comparatively small drying chamber can be used.

Preferably, the control means is configured to simultaneously vary the frequencies f1 and f2 within a predetermined frequency range, wherein a difference f1-f2 is preferably at least substantially constant for generating an at least substantially constant beat frequency f3. The frequency range (within which f1 and f2 may be varied) can be for example 100 to 600 Hz, preferably 300 to 500 Hz. Thereby, a high band of frequencies may be generated containing both odd and even harmonics of an average frequency f4 = (f1 + f2)/2, while the low beat frequency f3 may preferably remain (effectively) unchanged (if f3 is constant). The difference f1-f2 can be between 10 Hz and 30 Hz, in particular 20 Hz. Advantageously, the average frequency f4 is adapted to current process parameters, in particular the temperature within the combustion chamber. Thereby, resonance conditions can be adjusted (which are dependent on the speed of sound being dependent on the temperature). Preferably, a temperature determining means is provide for determining the temperature within the combustion chamber. The control means may control f1 and f2 based on the temperature.

The compressed air (modulated by f1 and f2) may be mixed with fuel. The mixture may be ignited by an ignition source inside the combustion chamber.

In general, f1 and/or f2 may be more than 100 Hz, preferably more than 300 Hz and/or less than 600 Hz, preferably less than 500 Hz. An average frequency f4 = (f1 + f2)/2 may be more than 300 Hz and/or less than 500 Hz. The beat frequency f3 may be more than 10 Hz and/or less than 30 Hz.

The frequencies f1 and f2 are preferably adjusted (in particular by the control means) such that the fundamental frequency and/or odd and/or even harmonics of an average frequency f4 = (f1 + f2)/2 resonate with the combustion chamber. In particular, a high frequency band (with a fundamental frequency e.g. between 300 to 500 Hz) as defined by f1 and f2 may be adjusted to resonate with a comparatively small (regarding its volume or acoustical length, respectively) combustion chamber while the (low) beat frequency f3 (typically at least approximately 30 Hz) passes through the combustion chamber and resonates with a comparatively large (regarding its volume or acoustical length, respectively) drying chamber.

The pulsed combustion (continuous pulsed combustion) in the combustion chamber may generate a stream of high-temperature exhaust gases which exit at a high velocity (for example, 100 m/s) via a nozzle. The mass and inertia of the high-temperature, oscillating exhaust gas may form a conduit (waveguide) on which both a high and a low-frequency acoustic shockwave may be super-imposed. Such conduit may additionally channel acoustic energy at "screech" frequencies, as well as a broadband of harmonic frequencies generated inside the combustion chamber, towards an impingement zone.

The frequencies f1 and f2 may be adjusted (in particular by the control means) such that the combustion chamber functions as a low pass filter absorbing the average frequency f4 = (f1 + f2)/2, wherein the-beat frequency f3 passes preferably (substantially) unchanged. In particular, the average frequency stays within the combustion chamber. In particular, acoustic pulses at the beat frequency f3, generated in the combustion chamber, may be too low to excite acoustic resonance in the cavities of the (small volume) combustion chamber and pass through the combustion chamber (and preferably through a shear atomizer downstream of the combustion chamber) to find resonance in the (large volume) drying chamber. In general, the combustion chamber may behave like a low-pass filter for the beat frequency f3.

According to another aspect, a pulsed combustion dryer for dehydration and/or granulation of a wet feedstock, in particular viscous feedstock such as a feedstock containing natural fibres, sugars and/or vegetable starches, comprises a pulsed combustor assembly as described above.

The pulsed combustion dryer may comprise an atomizer, in particular shear atomizer. The pulsed combustion dryer may comprise a drying chamber. A volume of a drying chamber may be larger than a volume of the combustion chamber. Preferably, the volume of the drying chamber is at least 50 times, further preferably at least 100 times, even further preferably at least 300 times, e.g. 600 times as large the volume of the combustion chamber. The volume of the drying chamber may be less than 1000 times the volume of the combustion chamber, preferably less than 800 times, further preferably less than 600 times. An acoustic length of the drying chamber may be at least 5 times, further preferably at least 10 times, even further preferably at least 30times as long as an acoustic length of the combustion chamber. The pulsed combustion dryer may comprise a granulator, preferably fluid bed granulator, in particular spouted bed granulator. The resonance frequency of the combustion chamber may be at least 2 times, preferably at least 3 times, further preferably, at least 4 times, even further preferably at least 6 times as large as the resonance frequency of the dryer. The granulator (spouted bed granulator) may comprise a free board area (= area between a top surface of a bed of the granulator and a nozzle where the feedstock emerges).

It is preferred that the beat frequency f3 resonates with the drying chamber. In general, it is possible to induce (or excite) acoustic resonance in both cavities (the combustion chamber and the drying chamber) even if they have two different sizes. This is achieved by "mixing" the frequencies f1 and f2 and generating the beat frequency f3. Thereby, it is possible not only to have acoustic pulses in the combustion chamber (as in principle also in the prior art) but at the same time, also in the (large volume) drying chamber. Thereby, the dehydration and/or granulation can be realised in a more efficient way, in particular faster.

According to another aspect, a method for dehydration and/or granulation of a wet feedstock, in particular a viscous feedstock such as a feedstock containing natural fibres, sugars and/or vegetable starches, preferably utilising the pulsed combustor assembly of the pre-described kind and/or the pulsed combustion dryer of the pre-described kind, comprises a supply of fuel via a fuel supply line and a supply of a first pulsed air stream with a pulse frequency f1 via a first air supply line to a combustion chamber. The method may further comprise supplying a second pulsed air stream via a second air supply line with a pulse frequency f2 to the combustion chamber, wherein f2 is preferably higher or lower than f1. The method may comprise the further steps of adjusting (controlling) f1 and f2 so that an average frequency f4 = (f1 + f2)/2 resonates with the combustion chamber. The average frequency may stay in the combustion chamber. A beat frequency f3 (of f1 and f2) may pass through the combustion chamber and may preferably resonate with a drying chamber. The method may contain further features according to the functional features being described with respect to the pulsed combustor assembly and/or the pulsed combustion dryer above.

Another aspect of the invention is a use of the pulse combustion dryer of the pre-described kind for dehydration and/or granulation of a wet feedstock, in particular a viscous feedstock such as a feedstock containing natural fibres. The pulsed combustion dryer and/or the method for dehydration and/or granulation may be applied for dehydration (drying) and simultaneously producing granular products, for example from (pumpable) pastes, slurries and/or (smoothie-like) purées, in particular derived from (whole) fruits and/or vegetables (e.g. as used in the food and/or beverage industry sectors). Further applications may be other (paste-like) feedstock such as meat, fish and/or dairy products (e.g. including viscous polymers, minerals and/or chemicals).

Preferably, the pulsed combustion dryer does not comprise a Helmholtz resonator, in particular a resonating tube (at the outlet of the combustion chamber).

According to a further aspect of the invention, a method of dehydration and granulation of a wet feedstock, in particular a viscous feedstock such as a feedstock containing natural fibres, sugars and/or vegetable starches is proposed, wherein the pulse or pulsed combustor dryer as described above is utilised and wherein the opening degree (width) of the at least one openings/slots is adjusted (controlled). In particular, the spouting gas inside a bed of the feedstock circulates, preferably such that the feedstock is suspended and/or rotated by the circulating gas.

According to a further aspect, a use of the spouted bed granulator as described above and/or a combustor dryer as described above for dehydration and granulation of a wet feedstock, in particular a viscous feedstock such as a feedstock containing natural fibres is proposed.

In general, a size of the (spherical) granules obtained by the spouted bed granulator and/or combustor dryer and/or method of the present invention may vary between 1.0 and 5.0 millimetres.
- Fig. 1:: a schematic of a dehydration and granulation apparatus according to the invention;
- Fig. 2:: a spouted bed granulator in a first view;
- Fig. 3:: the spouted bed granulator of Fig. 2 in a second view;
- Fig. 4:: the spouted bed granulator of Fig. 2 in a cross-section and a first position of a moveable member;
- Fig. 5:: the cross-section according to Fig. 4, in a second position of the moveable member;
- Fig. 6:: the cross-section of Fig. 4, in a third position of the moveable member; and
- Fig. 7:: a fluid bed granulator in an oblique view;
- Fig. 8:: a base portion of the granulator of Fig. 7;
- Fig 9:: another view of the base portion according to Fig. 8;
- Fig. 10:: a lower part of the base portion of Fig. 8;
- Fig. 11:: the lower part of Fig. 11 in a second view;
- Fig. 12:: a portion of the base portion of Fig. 8 in a first state;
- Fig. 13:: the portion of Fig. 12 in a second state; and
- Fig. 14:: a further (with respect to Figs. 12 and 13 larger) portion of the base portion of Fig. 8.

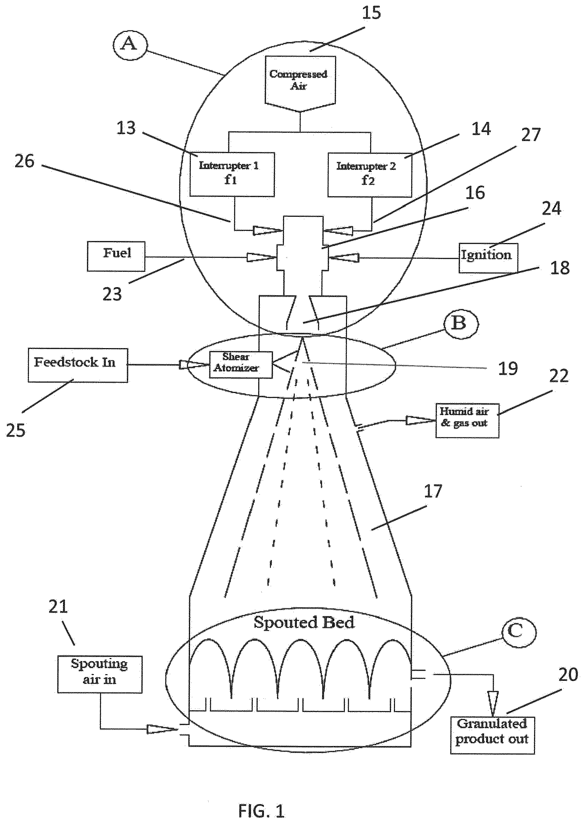

The enclosed Fig. 1 shows an embodiment and (further) aspects of the invention. Fig. 1 shows a schematic of a dehydration and granulation apparatus.

The apparatus comprises a pulsed combustor assembly A for generating a (continuous) stream of high-temperature sonic pulses. Combustor assembly A is coupled to a shear atomizer B. The shear atomizer B finely divides the wet feedstock before being dehydrated on its way to an (integrated) spouted bed granulator C. The spouted bed granulator C produces and delivers the final product as, in particular powders, granules or melts. The pulsed combustor assembly A and shear atomizer B may require less than 10 milliseconds for removing more than 90% of the product's moisture. The balance may be removed in the spouted bed granulator C.

The combustor assembly A is "externally" pulsed using two motorised air interrupters 13 and 14, which are both connected to a common compressed air supply 15 via a first and a second air supply line 26, 27. The compressed air supply provides sufficient energy for generating a stream of (sharp) acoustic pulses (or shockwaves) when the air passes through the air interrupters 13 and 14 in the direction of a combustion chamber 16. In the combustion chamber 16, the air is utilised for combustion and optionally as excess air.

A fuel supply line 23 provides fuel to the combustion chamber 16. The fuel is ignited by an ignition source 24. An inlet 21 is provided for supplying feedstock to the apparatus. Via an outlet 22, humid air and gas emerges from the drying chamber 17. Inlet 21 provides the spouting air source. The granulated product may emerge from an outlet 20.

The interrupters 13 and 14 may comprise a (motorised) rotating disk, lobe or valve assembly where a ported or shaped element rotates in (close) proximity to a stationary element. Ports may periodically interact or align with one another, thereby releasing a burst of pulsed air into the combustion chamber 16. Rotating the (motorised) interrupters 13 and 14 at a high speed generates two distinct (high-pitch, siren-like) tones at frequencies f1 and f2 respectively, where frequencies f1 and f2 are directly proportional to the motor speeds of the interrupters 13 and 14. Combining the two frequencies f1 and f2 in the combustion chamber 16 produces a distinct third, low beat frequency at a beat frequency f3 corresponding to (or at least closely approximating) the difference between the frequencies f1 and f2. By simultaneously varying the speeds of air interrupters 13 and 14 with a constant speed difference, corresponding to f3, a band of frequencies may be generated, defined by f1 and f2 without affecting the beat frequency f3. This high band of frequencies may contain both odd and even harmonic components of frequencies f1 and f2, while the low (fundamental) frequency f3 remains effectively unchanged.

The high-frequency band (between 300 and 500 Hz), as defined by f1 and f2, is adjusted to resonate with the (small volume) combustion chamber 16 while the low-frequency component f3 (at least approximately 30 Hz) passes through the combustion chamber 16 to resonate with a (larger volume) drying chamber 17.

Continuous pulsed combustion in the combustion chamber 16 generates a stream of high-temperature exhaust gases which exit from chamber 16 at high velocity (above 100 m/s) via a nozzle 18. The mass and inertia of the high-temperature, oscillating exhaust gases form a conduit or waveguide on which both high and low-frequency acoustic shockwaves are super-imposed. This conduit may channel a broadband of harmonic frequencies generated inside the combustion chamber (as well as acoustic energy at screech frequencies), towards an impingement zone 19.

Energy from the high-frequency (e.g. 300 to 500 Hz) and (optionally) screech frequency components of the hot pulsed gas stream is utilised both to atomise and dehydrate wet feedstock passing through the shear atomizer B into the impingement zone 19, while the low beat frequency component of e.g. 10 to 30 Hz is "tuned" to resonate with the (large-volume) drying chamber 17. The (acoustic) pulses at the beat frequency f3, generated in the pulsed combustor assembly A are generally too low to excite low acoustic resonance in the cavities of the (small-volume) combustion chamber 16 and pass through both the combustion chamber 16 and the shear atomizer B to find resonance in the (larger volume) drying chamber 17 forming a free board area of the spouted bed granulator C. Therefore, combustion chamber 16 behaves like a low pass filter for the beat frequency f3.

The following example further illustrates the effects and functions of the apparatus (the values are not necessarily limiting). If f1 is 430 Hz and f2 is 450 Hz, the beat frequency f3 is 20 Hz. The combustion chamber may be tuned to the odd and even half wavelength integers corresponding to the average frequency of 440 Hz falling midway between 430 Hz and 450 Hz. The beat frequency of 20 Hz, however, falls outside this resonance band due to its long acoustic wavelength.

The harmonics of the average frequency originating from the two high-frequency (shortwave length) shockwaves are used to atomize liquid feedstock while the high temperature component driven by the combustion gases is used to dehydrate the feedstock droplets formed during atomisation. The (low-frequency, long wavelength) beat frequency f3 (derived from f1 and f2) is used to enhance dehydration in the downstream drying chamber 17.

The apparatus allows the generation of both high temperatures (600 to 800°C) and high frequency (100 to 500 Hz) acoustic shockwaves for atomizing and partly dehydrating liquid feedstock. The atomization and partial dehydration may require less than 0.1 seconds depending on the thermal efficiency of the pulse combustor. High viscosity slurries (as for example in the fruit and vegetable industries) typically require higher acoustic energy and longer atomization times. According to the prior art, usually a "post-atomization" thermal energy and comparatively long retention times are required for total dehydration. According to the present invention, thermal drying is partly replaced by acoustic drying which greatly reduces energy and product retention times and improves product quality and taste.

In particular, the apparatus creates improved sonic conditions inside the drying chamber in order to enhance the removal of residual moisture from the atomized droplets (aerosols) at lower temperatures and shorter product retention times.

In the prior art, most or all of the thermal and sonic energy is spent, after product atomization and partial dehydration leaving little or no acoustic energy for further dehydration inside the downstream drying chamber. The present apparatus, however, allows subjecting the aerosols in the drying chamber to (longitudinal and/or transverse) sonic waves, which may be tuned to resonate with the drying chamber cavity. These high-energy pressure and partial vacuum pulses based on the low beat frequency f3 accelerate mass transfer (moisture evaporation), thereby allowing a reduction of both chamber temperature and product retention times.

Because the two frequencies f1 and f2 are provided, it is possible to have a low fundamental frequency (of 10 to 30 Hz) within the drying chamber which would not be possible with a single frequency provided to the combustion chamber.

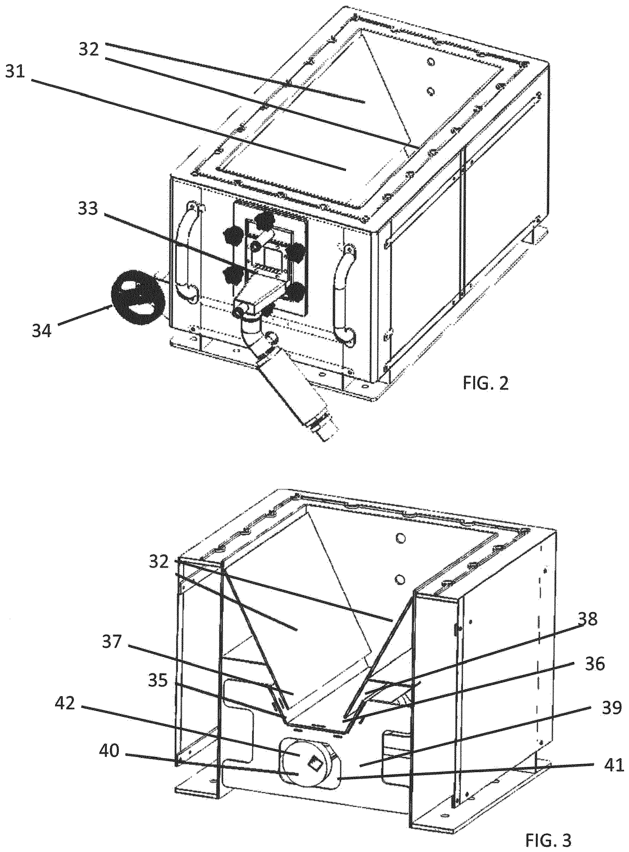

Fig. 2 shows a first oblique view of a spouted bed granulator in accordance with the invention. The granulator is generally box-shaped (which is not necessary) and comprises a receiving portion 31, with angled (inclined) walls 32, a product extraction port 33 and a slot adjustment mechanism 34, to be described later.

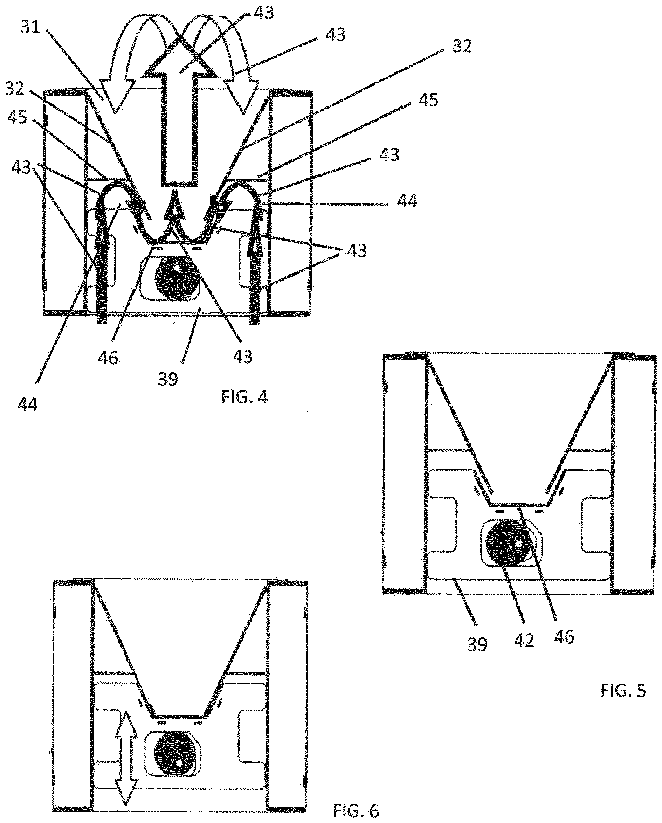

In the partially cut view of Fig. 3, (longitudinal) slots 35 and 36 are formed by (lower) end portions 37, 38 of the angled walls 32, 33, on the one hand, and a moveable member 39 on the other hand. The moveable member 39 can be moved (up and down) by a (rotating) cam mechanism 40 in order to (gradually) open or close the slots 35, 36. The moveable member 39 is formed by a (longitudinal) web (or profile) element which has (approximately) an H-shape (other shapes are possible). Moreover, the moveable member 39 comprises an opening 41 for receiving a cam 42 of the cam mechanism 40. By rotating the cam 42, the moveable member 39 is moved up or down in order to close or open (fully or to a certain degree) the slots 35, 36 which is described in detail with respect to Figs. 4 to 6.

In Fig. 4, the slots 35, 36 are open. If now, the cam 42 is rotated (clockwise), the moveable member 39 moves up (see Fig. 5) and partially closes the slots 35, 36. If the cam 42 is even rotated further, the moveable member 39 closes the slots 35, 36 completely.

In Fig. 4, the stream of (spouting) gas is shown by arrows 43. As can be seen, two channels 44 are formed by two (horizontal) plate members 45. From these channels 44, the air moves between an outside of the walls 32 and an inside of a tray 46, formed by the moveable member 39, to the bottom of the receiving portion 31. From there, the air moves (in vertical direction) up and (depending on the pressure of the gas and the opening position of the slots 35, 36) back along the walls 32.

A granulation zone of the combustor dryer may comprise the spouted bed granulator according to figures 2 to 5 and a freeboard area of the drying chamber 17 (shown in Fig. 1) coupled to the sheer atomiser B.

In essence, the mechanism of Figs. 2 to 5 forms a valve structure for supplying spouting gas. When the spouting gas passes through the two slots 35, 36 provided in the granulator, the gas is forced in a (distinct) circulating motion inside the bed of the particulate product mass inside the freeboard area. The spouting gas may be pressurised externally and is used as a motivating force to simultaneously suspend and rotate the material in such a way as to create a dilute body of spouting material moving upwards along a central longitudinal axis of the two slots 35, 36 and returning via a dense body of material moving downward along the V-shape walls of the receiving portion 31.

By the upward "spouting motion", an atomised (semi-dehydrated) product and melts projected down from zone B may be prevented from sticking to the walls of the drying chamber 17, while the circular downward motion induced by gas passing through the two slots 35, 36 allows to create (spherical) granules.

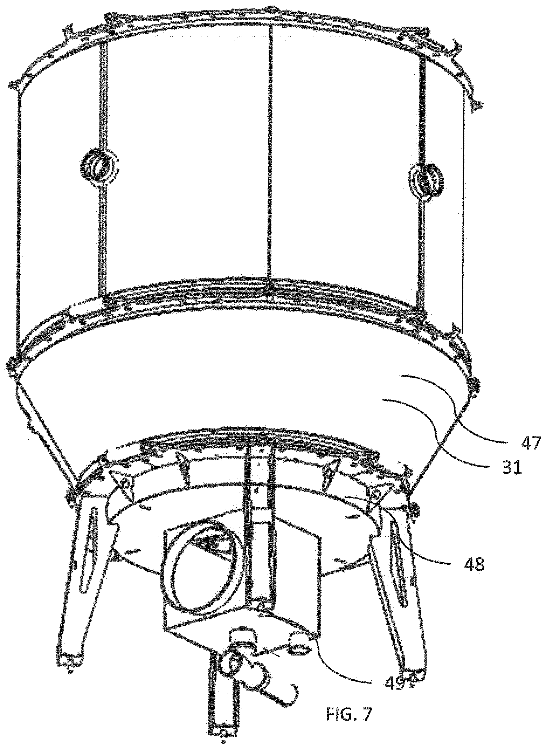

Fig. 7 shows an embodiment of a fluid bed granulator for a combustor dryer, preferably for a pulsed combustor dryer for drying and granulation of a wet feedstock.

The fluid bed granulator of Fig. 7 comprises a receiving portion 31 having a (frusto-) conical wall 47 and a bottom member 48. Through the bottom member 48, fluid bed gas is supplied, by a fluid bed gas supplying means 49.

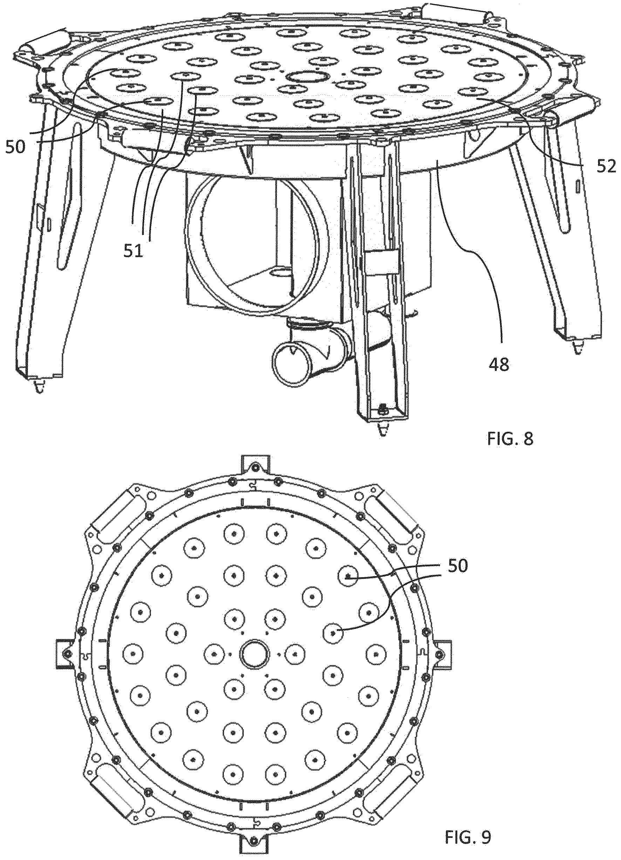

The lower portion of the granulator of Fig. 7, comprising the bottom member 48 is shown in Fig. 8, in more detail. As can be seen in Fig. 8 (and similarly Fig. 9), the bottom member 48 comprises a plurality of cover members 50, covering (in Fig. 8 closed) openings 51. Precisely, the openings 51 are provided in a (circular) bottom plate 52 of the bottom member 48.

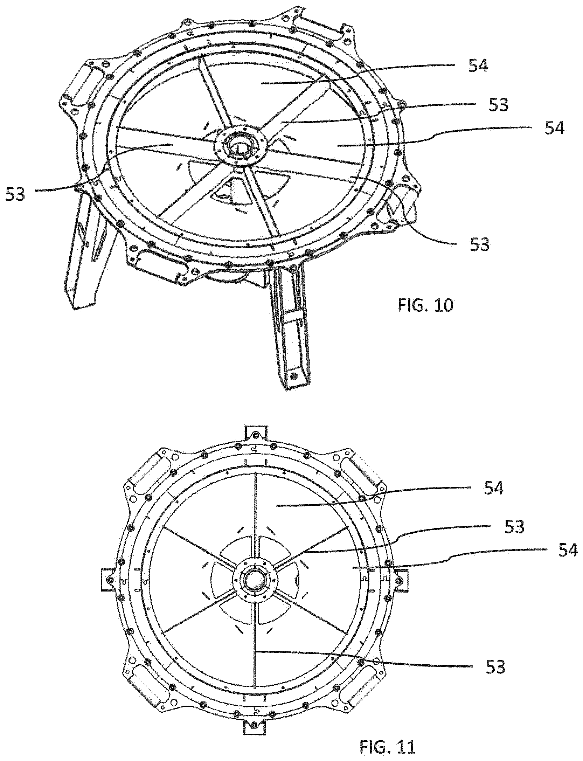

In Figs. 10 and 11, the lower portion according to Figs. 8 and 9 is shown without the bottom plate 52. As can be seen, the bottom plate 52 is supported by supporting elements 53 which may (as seen in Figs. 10 and 11) be radially extending. The fluid bed gas may stream through spaces 54 defined by the supporting elements 53. In this way, the fluid bed gas can be distributed onto the openings 51.

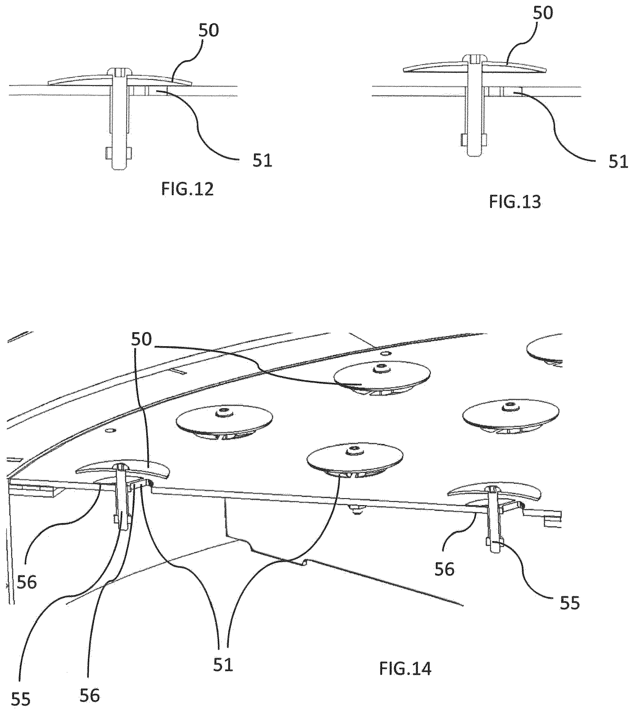

The openings 51 and cover members 50 are shown in further detail. As shown in Fig. 12, the cover member 50 covers the corresponding opening 51 so that the opening 51 is closed. In contrast, Fig. 13 shows a position of the cover member 15 where fluid bed gas may stream through the opening 51. In this case, a lifting force for lifting the cover member 50 may come from the fluid bed gas (or the pressure of the fluid bed gas). As can be seen in particular in Fig. 14, the respective cover member 50 is supported by a rod 54 which, itself, is (slidably) supported by one or (in this concrete case) several supporting members 55 which may (as seen in Fig. 14) extend radially from the rod 54.

In general, gas (air) streaming through the openings 50 in Fig. 14 results in a random (chaotic) movement of the product to be granulated (which may result in a random-shaped product granulate). In comparison, the spouted bed granulator according to Fig. 2, allows the production of comparatively homogenous (regarding granulate shape and/or granulate size) product granulates.

### Reference numerals

- A: Pulse combustor assembly
- B: Shear atomizer
- C: Spouted bed granulator
- 13: First air interrupter
- 14: Second air interrupter
- 15: Compressed air supply
- 16: Combustion chamber
- 17: Drying chamber
- 18: Nozzle
- 19: Impingement zone
- 20: Outlet for granulated products
- 21: Inlet for spouting air
- 22: Outlet for humid air and gas
- 23: Fuel supply line
- 24: Ignition
- 25: Inlet for feedstock
- 26: First air supply line
- 27: Second air supply line
- 31: Receiving portion
- 32: Angled wall
- 33: Product extraction port
- 34: Slot adjustment mechanism
- 35: Slot
- 36: Slot
- 37: End portion
- 38: End portion
- 39: Moveable member
- 40: Rotating cam mechanism
- 41: Opening
- 42: Cam
- 43: Arrows
- 44: Channel
- 45: Plate member
- 46: Tray
- 47: (frusto-) conical wall
- 48: bottom member
- 49: fluid bed gas supplying means
- 50: cover member
- 51: opening
- 52: bottom plate
- 53: supporting element
- 54: space
- 55: rod
- 56: supporting member

## Claims

1. A pulse or pulsed combustor dryer, for dehydration and granulation of a wet feedstock, in particular a viscous feedstock such as a feedstock containing natural fibres, sugars and/or vegetable starches, comprising a combustion chamber (16), a drying chamber, and one or more spouted bed granulators, wherein the spouted bed granulator comprises:
a receiving portion (31) for receiving the feedstock emerging from the combustion chamber (16) of the combustor dryer, wherein at least a lower portion of the receiving portion comprises a pair or more of inclined walls approaching each other in the direction of one or more openings or a frusto-conical inner wall,
a spouting gas supplying means, for supplying a spouting gas, to the receiving portion (31) via the one or more openings, in particular one or more slots (35, 36), and
at least one adjustment means for adjusting an opening degree of the one or more openings.

2. The pulse or pulsed combustor dryer of claim 1, **characterised in that** the openings comprise a pair of slots (35, 36), preferably being oriented towards each other.

3. The pulse or pulsed combustor dryer of one of the preceding claims, **characterised by** a movable bottom member (39), in particular such that movement of the movable bottom member (39) closes or opens the one or more openings.

4. The pulse or pulsed combustor dryer of claim 3, **characterised by** a cam mechanism (40) for moving the movable bottom member (39), in particular up and down, and/or
**characterised in that**
the movable member (39) comprises a planar portion for opening and closing an aperture of a wall of the receiving portion or an aperture between two or more walls of the receiving portion and/or
**characterised in that**
the movable member (39) comprises a web element or is formed of a web element.

5. The pulse or pulsed combustor dryer of one of the preceding claims, **characterised by** a bottom member, in particular the bottom member (39) of one of the claims 3 or 4, having a bowl-shape and/or receiving an end portion of at least one wall (32, 33) of the receiving portion (31), in particular such that the end portion of said at least one wall and the bottom member form the one or more openings, in particular slots.

6. The pulse or pulsed combustor dryer of one of the preceding claims, **characterised in that** the one or more openings, in particular slots, extend over, at least substantially, the entire length or width of the receiving portion (31).

7. The pulse or pulsed combustor dryer of one of the preceding claims, **characterised by** at least one, in particular horizontal, wall (45) contacting the receiving portion (31) from the outside thereof and forming, in particular together with the movable member (39), a fluid channel (44) for supplying the fluid bed gas, in particular spouting gas to the one or more openings, in particular one more slots.

8. The pulse or pulsed combustor dryer of one of the preceding claims, **characterised by** a control means for controlling opening and closing of the one or more openings, in particular one more slots.

9. The pulse or pulsed combustor dryer of one of the preceding claims, **characterised in that** at least three, preferably at least five, further preferably at least ten openings for supplying the fluid bed gas are provided and/or **characterised in that** the one or more openings for supplying the fluid bed gas are circular and/or **characterised in that** the one or more openings are covered and/or coverable by, in particular circular, cover elements which may be lifted in order to open the one or more openings.

10. The pulsed combustor dryer of one of the preceding claims, **characterised by** at least one fuel supply line (23), at least one air supply line (26), and at least one pulsed air generator, wherein the pulsed air generator is connected to the air supply line (26) for generating at least a first pulsed air stream with a pulse frequency f1 entering the combustion chamber (16), preferably further **characterized by** a second air supply line (27) and a second pulsed air generator being connected to the second air supply line (27) and configured to generate a second pulsed air stream with a pulse frequency f2 entering the combustion chamber, wherein f2 is preferably higher or lower than f1.

11. The pulse or pulsed combustor dryer of one of the preceding claims, **characterised by** at least one gas outlet (22), in particular in an upper area of the drying chamber, for exhausting gases, in particular humid air from inside the drying chamber (17).

12. A method of dehydration and granulation of a wet feedstock, in particular a viscous feedstock such as a feedstock containing natural fibres, sugars and/or vegetable starches, providing a pulse or pulsed combustor dryer of one of the preceding claims, and adjusting the width of the one or more openings, preferably
wherein the spouting gas circulates inside a bed of the feedstock, in particular such that the feedstock is suspended and/or rotated by the circulating gas.

13. A use of the pulse or pulsed combustor dryer of one of the claims 1 to 11 for dehydration and granulation of a wet feedstock, in particular a viscous feedstock such as a feedstock containing natural fibres.

## Patentansprüche

1. Puls- oder gepulster Brenner-Trockner zum Dehydrieren und Granulieren eines nassen Rohstoffs, insbesondere eines viskosen Rohstoffs wie eines Rohstoffs, der Naturfasern, Zucker und/oder pflanzliche Stärken enthält, umfassend eine Brennkammer (16), eine Trocknungskammer, und einen oder mehrere Strahlschicht-Granulatoren, wobei der Strahlschicht-Granulator umfasst:
einen Aufnahmeabschnitt (31) zum Aufnehmen des aus der Brennkammer (16) des Brenner-Trockners austretenden Rohstoffes, wobei mindestens ein unterer Abschnitt des Aufnahmeabschnitts ein Paar oder mehrere schräge Wände, die in Richtung der einen oder mehreren Öffnungen aufeinander zulaufen, oder eine kegelstumpfförmige Innenwand aufweist,
eine Zufuhrvorrichtung für Ausspritzgas zum Zuführen eines Ausspritzgases zu dem Aufnahmeteil (31) über die eine oder mehreren Öffnungen, insbesondere einen oder mehrerer Schlitze (35, 36), und
mindestens eine Einstelleinrichtung zum Einstellen eines Öffnungsgrades der einen oder mehreren Öffnungen.

2. Puls- oder gepulster Brenner-Trockner, **dadurch gekennzeichnet, dass** die Öffnungen ein Paar Schlitze (35, 36) aufweisen, die vorzugsweise zueinander ausgerichtet sind.

3. Puls- oder gepulster Brenner-Trockner nach einem der vorhergehenden Ansprüche, **gekennzeichnet durch** ein bewegliches Bodenelement (39), insbesondere derart, dass eine Bewegung des beweglichen Bodenelements (39) die eine oder mehrere Öffnungen verschließt oder öffnet.

4. Puls- oder gepulster Brenner-Trockner nach Anspruch 3, **gekennzeichnet durch** einen Nockenmechanismus (40) zum Bewegen des beweglichen Bodenelements (39), insbesondere nach oben und unten, und/oder **dadurch gekennzeichnet, dass**
das bewegliche Element (39) einen planaren Abschnitt zum Öffnen und Schließen einer Öffnung einer Wand des Aufnahmeabschnitts aufweist oder eine Öffnung zwischen zwei oder mehr Wänden des Aufnahmeabschnitts und/oder
**dadurch gekennzeichnet, dass**
das bewegliche Element (39) ein Stegelement aufweist oder durch ein Stegelement ausgebildet ist.

5. Puls- oder gepulster Brenner-Trockner nach einem der vorhergehenden Ansprüche, **gekennzeichnet durch** ein Bodenelement, insbesondere das Bodenelement (39) nach einem der Ansprüche 3 oder 4, das eine Schüsselform aufweist und/oder einen Endabschnitt von mindestens einer Wand (32, 33) des Aufnahmeabschnitts (31) aufnimmt, insbesondere dergestalt, dass der Endabschnitt der mindestens einen Wand und das Bodenelement die eine oder mehreren Öffnungen, insbesondere Schlitze, ausbilden.

6. Puls- oder gepulster Brenner-Trockner nach einem der vorhergehenden Ansprüche, **dadurch gekennzeichnet, dass** sich die eine oder mehreren Öffnungen, insbesondere Schlitze, zumindest im Wesentlichen über die gesamte Länge oder Breite des Aufnahmeabschnitts (31) erstrecken.

7. Puls- oder gepulster Brenner-Trockner nach einem der vorhergehenden Ansprüche, **gekennzeichnet durch** mindestens eine, insbesondere horizontale, Wand (45), die den Aufnahmeabschnitt (31) von dessen Außenseite her berührt und insbesondere zusammen mit dem beweglichen Element (39) einen Fluidkanal (44) für die Zufuhr des Fließbettgases, insbesondere des Ausspritzgases, zu der einen oder mehreren Öffnungen, insbesondere einem weiteren Schlitz, bildet.

8. Puls- oder gepulster Brenner-Trockner nach einem der vorhergehenden Ansprüche, **gekennzeichnet durch** ein Steuermittel zum Steuern des Öffnens und Schließens der einen oder mehreren Öffnungen, insbesondere eines weiteren Schlitzes.

9. Puls- oder gepulster Brenner-Trockner nach einem der vorhergehenden Ansprüche, **dadurch gekennzeichnet, dass** mindestens drei, vorzugsweise mindestens fünf, weiterhin vorzugsweise mindestens zehn Öffnungen für die Zufuhr des Fließbettgases vorgesehen sind und/oder **dadurch gekennzeichnet, dass** die eine oder mehreren Öffnungen zum Zuführen des Fließbettgases kreisförmig sind und/oder **dadurch gekennzeichnet, dass** die eine oder mehreren Öffnungen durch, insbesondere kreisförmige, Abdeckelemente abgedeckt und/oder abdeckbar sind, die zum Öffnen der einen oder mehreren Öffnungen angehoben werden können.

10. Gepulster Brenner-Trockner nach einem der vorhergehenden Ansprüche, **gekennzeichnet durch** mindestens eine Brennstoffversorgungsleitung (23), mindestens eine Luftzufuhrleitung (26) und mindestens einen Gepulste-Luft-Generator, wobei der Gepulste-Luft-Generator mit der Luftzufuhrleitung (26) verbunden ist, um mindestens einen ersten gepulsten Luftstrom mit einer Pulsfrequenz f1 zu erzeugen, der in die Brennkammer (16) eintritt,
bevorzugt weiterhin **gekennzeichnet durch** eine zweite Luftzufuhrleitung (27) und einen zweiten Gepulste-Luft-Generator, der mit der zweiten Luftzufuhrleitung (27) verbunden und so konfiguriert ist, dass er einen zweiten gepulsten Luftstrom mit einer Pulsfrequenz f2 erzeugt, der in die Brennkammer eintritt, wobei f2 vorzugsweise höher oder niedriger als f1 ist.

11. Puls- oder gepulster Brenner-Trockner nach einem der vorhergehenden Ansprüche, **gekennzeichnet durch** mindestens einen Gasauslass (22), insbesondere in einem oberen Bereich der Trocknungskammer, zum Ablassen von Gasen, insbesondere feuchter Luft aus dem Inneren der Trocknungskammer (17).

12. Verfahren zum Dehydrieren und Granulieren eines nassen Rohstoffs, wie eines Rohstoffs, das Naturfasern, Zucker und/oder pflanzliche Stärken enthält, durch Bereitstellen eines Puls- oder gepulsten Brenner-Trockners nach einem der vorstehenden Ansprüche und durch Einstellen der Breite der einen oder mehreren Öffnungen, vorzugsweise
wobei das Ausspritzgas innerhalb eines Bettes des Rohstoffs zirkuliert, insbesondere derart, dass der Rohstoff durch das zirkulierende Gas suspendiert und/oder gedreht wird.

13. Verwendung des Puls- oder gepulsten Brenner-Trockners nach einem der Ansprüche 1 bis 11 zum Dehydrieren und Granulieren eines nassen Rohstoffs, insbesondere eines viskosen Rohstoffs, wie z.B. eines Rohstoffs, das Naturfasern enthält.

## Revendications

1. Séchoir à combustion pulsée pour la déshydratation et la granulation d'une matière première humide, en particulier d'une matière première visqueuse telle qu'une matière première contenant des fibres naturelles, des sucres et/ou des amidons végétaux, comprenant une chambre de combustion (16), une chambre de séchage, et un ou plusieurs granulateurs à lit fluidisé, dans lequel le granulateur à lit fluidisé comprend :
une portion de réception (31) pour recevoir la matière première provenant de la chambre de combustion (16) du séchoir à combustion, dans lequel au moins une portion inférieure de la portion de réception comprend une paire ou plusieurs parois inclinées s'approchant les unes des autres dans la direction d'une ou plusieurs ouvertures ou d'une paroi intérieure tronconique,
un moyen d'alimentation de gaz de fluidisation, pour alimenter un gaz de fluidisation à la portion de réception via lesdites une ou plusieurs ouvertures, en particulier une ou plusieurs fentes (35, 36), et
au moins un moyen d'ajustement pour ajuster un degré d'ouverture desdites une ou plusieurs ouvertures.

2. Séchoir à combustion pulsée selon la revendication 1, **caractérisé en ce que** les ouvertures comprennent une paire de fentes (35, 36), orientées de préférence l'une en direction de l'autre.

3. Séchoir à combustion pulsée selon l'une des revendications précédentes, **caractérisé par** un élément de fond déplaçable (39), en particulier tel qu'un déplacement de l'élément de fond déplaçable (39) ferme ou ouvre lesdites une ou plusieurs ouvertures.

4. Séchoir à combustion pulsée selon la revendication 3, **caractérisé par** un mécanisme à came (40) pour déplacer l'élément de fond déplaçable (39), en particulier vers le haut et vers le bas, et/ou
**caractérisé en ce que**
l'élément déplaçable (39) comprend une portion plane pour ouvrir et fermer une fenêtre d'une paroi de la portion de réception ou une fenêtre entre deux ou plusieurs parois de la portion de réception et/ou
**caractérisé en ce que**
l'élément déplaçable (39) comprend un élément de nappe ou est formé d'un élément de nappe.

5. Séchoir à combustion pulsée selon l'une des revendications précédentes,
**caractérisé par** un élément de fond, en particulier l'élément de fond (39) de l'une des revendications 3 ou 4, ayant la forme d'un bol et/ou recevant une portion d'extrémité d'au moins une paroi (32, 33) de la portion de réception (31), en particulier de telle façon que la portion d'extrémité de ladite au moins une paroi et l'élément de fond forment lesdites une ou plusieurs ouvertures, en particulier des fentes.

6. Séchoir à combustion pulsée selon l'une des revendications précédentes, **caractérisé en ce que** lesdites une ou plusieurs ouvertures, en particulier lesdites fentes, s'étendent au moins sensiblement sur la longueur entière ou la largeur entière de la portion de réception (31).

7. Séchoir à combustion pulsée selon l'une des revendications précédentes, **caractérisé par** au moins une paroi (45), en particulier horizontale, en contact avec la portion de réception (31) depuis l'extérieur de celle-ci et formant, en particulier conjointement avec l'élément déplaçable (39), un canal à fluide (44) pour alimenter le gaz pour lit fluidisé, en particulier le gaz de fluidisation, auxdites une ou plusieurs ouvertures, en particulier une ou plusieurs fentes.

8. Séchoir à combustion pulsée selon l'une des revendications précédentes, **caractérisé par** un moyen de commande afin de commander l'ouverture et la fermeture desdites une ou plusieurs ouvertures, en particulier une ou plusieurs fentes.

9. Séchoir à combustion pulsée selon l'une des revendications précédentes, **caractérisé en ce qu'**il est prévu au moins trois, de préférence au moins cinq, de manière encore plus préférée au moins dix ouvertures pour alimenter le gaz pour lit fluidisé et/ou **caractérisé en ce que** lesdites une ou plusieurs ouvertures pour alimenter le gaz pour lit fluidisé sont circulaires, et/ou **caractérisé en ce que** lesdites une ou plusieurs ouvertures sont couvertes et/ou susceptibles d'être couvertes par des éléments de couverture, en particulier circulaires, qui peuvent être soulevés afin d'ouvrir lesdites une ou plusieurs ouvertures.

10. Séchoir à combustion pulsée selon l'une des revendications précédentes, **caractérisé par** au moins un conduit d'alimentation de combustible (23), par au moins un conduit d'alimentation d'air (26), et par au moins un générateur d'air pulsé, dans lequel le générateur d'air pulsé est connecté au conduit d'alimentation d'air (26) pour générer au moins un premier courant d'air pulsé avec une fréquence de pulsation f1 entrant dans la chambre de combustion (16),
caractérisé en outre de préférence par un second conduit d'alimentation d'air (27) et par un second générateur d'air pulsé qui est connecté au second conduit d'alimentation d'air (27) et configuré pour générer un second courant d'air pulsé avec une fréquence de pulsation f2 entrant dans la chambre de combustion, telle que f2 est de préférence supérieure ou inférieure à f1.

11. Séchoir à combustion pulsée selon l'une des revendications précédentes, **caractérisé par** au moins une sortie de gaz (22), en particulier dans une zone supérieure de la chambre de séchage, pour des gaz d'échappement, en particulier de l'air humide depuis l'intérieur de la chambre de séchage (17).

12. Procédé de déshydratation et de granulation d'une matière première humide, en particulier d'une matière première visqueuse comme une matière première contenant des fibres naturelles, des sucres et/ou des amidons végétaux, comprenant les étapes consistant à fournir un séchoir à combustion pulsée selon l'une des revendications précédentes, et à ajuster la largeur desdites une ou plusieurs ouvertures, et de préférence
dans lequel le gaz de fluidisation circule à l'intérieur d'un lit de matière première, en particulier de telle façon que la matière première est mise en suspension et/ou mise en rotation par le gaz en circulation.

13. Utilisation du séchoir à combustion pulsée selon l'une des revendications 1 à 11 pour la déshydratation et la granulation d'une matière première humide, en particulier d'une matière première visqueuse comme une matière première contenant des fibres naturelles.
